(19) Europäisches Patentamt

European Patent Office

Office européen des brevets

(11) **EP 3 570 489 B1**

(12) **EUROPEAN PATENT SPECIFICATION**

(45) Date of publication and mention of the grant of the patent:
**08.04.2020 Bulletin 2020/15**

(51) Int Cl.:
***H04L 9/32*** *(2006.01)*

(21) Application number: **18173210.8**

(22) Date of filing: **18.05.2018**

(54) **DEVICE AND METHOD FOR TRANSFORMING BLOCKCHAIN DATA BLOCKS**

VORRICHTUNG UND VERFAHREN ZUR UMWANDLUNG VON BLOCKCHAIN-DATENBLÖCKEN

DISPOSITIF ET PROCÉDÉ DE TRANSFORMATION DE BLOCS DE DONNÉES DE CHAÎNE DE BLOCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2019 Bulletin 2019/47**

(73) Proprietor: **Siemens Aktiengesellschaft
80333 München (DE)**

(72) Inventor: **Höfig, Kai
80797 München (DE)**

(56) References cited:
**CN-A- 107 577 427**

- **MITAR MILUTINOVIC ET AL: "Proof of Luck: an Efficient Blockchain Consensus Protocol", ARXIV.ORG, CORNELL UNIVERSITY LIBRARY, 201 OLIN LIBRARY CORNELL UNIVERSITY ITHACA, NY 14853, 16 March 2017 (2017-03-16), XP080757306, DOI: 10.1145/3007788.3007790**

**Description**

TECHNICAL FIELD

Various embodiments of the invention enable techniques for transforming data blocks of a blockchain into another blockchain comprising an improved hash-function encryption mechanism.

BACKGROUND

Blockchains provide a decentralized protection mechanism of storing transactions in a decentralized environment. Examples comprise digital currencies, Smart Contracts as well as internet of things applications. The blockchain protection mechanism makes use of cryptographic means, thereby improving manipulation safety against unwanted effects.
It is expected that processing power will continue to increase. The decryption of a blockchain mechanism is an inverse computational problem that might be solved based on an increase in processing power. Thus, the protection mechanism of a blockchain may be breached by the increasing processing power and thus lose its security capabilities and therefore may become prone to manipulations.
Therefore, there is a demand for upgrading the protection mechanism of a blockchain.
Apart from this, documents US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275 and US 8 843 761 B2 are known to a skilled person.

SUMMARY

The document CN 107 577 427 A discloses a data migration method for a block chain system, wherein a new creation block comprises a range information of the data to be migrated of an old block chain system. Therein, according to the range information, each old transaction recorded in each old block in the old blockchain is converted into a new transaction conforming to a new transaction data structure of the new blockchain, and the converted new transaction is migrated into the new blockchain. The new transaction data structure of the new blockchain includes traceback information indicating the location of the old transaction corresponding to the new transaction in the old blockchain.
The document "Proof of Luck: an Efficient Blockchain Consensus Protocol" by Mitar Milutinovic et al, in Arxiv.org, Cornell University Library, 201 Olin Library Cornell University Ithaca, NY 14853, 16 March 2017, (2017-03-16), XP080757306, DOI: 10.1145/3007788.3007790, discloses designs for multiple blockchain consensus primitives and a novel blockchain system based on the use of trusted execution environments (TEEs). Therein, an existing proof of work protocol is extended to construct a blockchain consisting of super-blocks. Super-blocks are made by merging m normal blocks and their proofs of luck. Participants continue to create individual blocks based on pending transactions and attach a proof of luck with a luck value 1 to the block. However, participants now select the m luckiest blocks (m blocks with highest 1) and merge, in a deterministic way, those m blocks into a super-block.
It is an object of the present disclosure to provide means for upgrading data protection against manipulation of a blockchain.
A device adapted to be connected with a blockchain network as well as a corresponding method are provided, in accordance with independent claims 1 and 13, respectively. Further embodiments are defined in the dependent claims.
According to an embodiment, a device is disclosed, which is adapted to be connected with a blockchain network. The device comprises a receiving module, which is adapted to receive, from the blockchain network, a first blockchain comprising a plurality of first data blocks, wherein chaining of the first blockchain is based on a first hash-function encryption mechanism. The device further comprises a transformation module, which is adapted to transform at least two first data blocks of the first blockchain into a single blockchain data block. The device further comprises a request module, which is adapted to request, at the blockchain network, chaining of the single blockchain data block with a second blockchain. Hereby, chaining of the second blockchain is based on a second hash-function encryption mechanism different from the first hash-function encryption mechanism.
Such an approach is based on the finding that data contained in first data blocks of a first blockchain may be committed to a new data block, which requests to be attached to a new second blockchain comprising an improved hash-function encryption mechanism. Therefore, whenever a second blockchain comprising an improved hash-function encryption mechanism is provided, data, previously collected in the first blockchain, may be committed to an improved security standard. Based on the specific configuration of the transformation module, which is enabled to create a single blockchain data block based on several data blocks of the first blockchain, a security upgrade of the data contained in the first blockchain may be performed, without there is a need to repeat the mining of the first blockchain. Such a mining, which enables verification of requested new data blocks for chaining with a blockchain, effort high computation resources.

Therefore, the device according to the present disclosure is adapted to enable a repeated security upgrade of blockchain data in an energy efficient manner. A hardening of the protection of the blockchain data becomes possible.

According to another embodiment, a method executed in a blockchain network is disclosed. The method comprises receiving, from the blockchain network, a first blockchain comprising a plurality of first data blocks, wherein chaining of the first blockchain is based on a first hash-function encryption mechanism. The method further comprises transforming at least two first data blocks of the first blockchain into a single blockchain data block, and requesting, at the blockchain network, chaining of the single blockchain data block with a second blockchain. Hereby, chaining of the second blockchain is based on a second hash-function encryption mechanism different from the first hash-function encryption mechanism.

Such an approach makes use of the advantages of the device outlined above.

A blockchain within the meaning of the present disclosure may refer to a continuously extendable set of data provided in a plurality of interconnected entities. Hereby, the entities may be configured as data blocks, wherein each data block may comprise a plurality of transaction data. Hereby, any of the transaction data may be signed by the owner of the transaction. Further, the interconnection may be provided by chaining using cryptographic means.

A blockchain network within the meaning of the present disclosure may refer to any data communication network comprising at least two network nodes, wherein the at least two network nodes may be configured to a) request the inclusion of data to the blockchain and/or b) verify the requested inclusion of data to the blockchain and/or c) receiving blockchain data.

A data block within the meaning of the present disclosure may refer to an entity comprising a set of data, wherein the block may be attached to a blockchain. Hereby, attaching the block may be enabled by chaining the block to the respective blockchain. According to the present disclosure, data blocks may be configured as first data blocks, wherein the first data blocks may be included in a first blockchain and/or provided for the first blockchain. The first data blocks may be different from each other. In addition, data blocks may be configured as second data blocks, wherein the second data blocks may be included in a second blockchain and/or provided for the second blockchain. The second data blocks may be different from each other. In addition, data blocks may be configured as blockchain data blocks, wherein the blockchain data block may include at least two blocks from the a single blockchain. Hereby, these at least two blocks may be directly interconnected with each other in the blockchain.

Chaining within the meaning of the present disclosure may refer any mechanism to interconnect two data blocks with each other. Hereby, cryptographic means may be provided. In addition, chaining a plurality of data blocks may induce a blockchain configuration. Hereby, chaining a data block to an existing blockchain may be requested by a first network node and may be verified by a second network node.

A hash-function encryption mechanism within the meaning of the present disclosure may refer to any transformation, which is adapted to map first data of a higher data volume to second data of a smaller data volume, and thereby providing means for encryption. Hereby, any second data may be unique and/or different from each other. The hash-function encryption mechanism may be adapted to chain data blocks in a blockchain and/or to attach a new data block in an existing blockchain. According to the present disclosure, different hash-function encryption mechanisms comprising different extent of complexity and/or computing time may be provided.

In an embodiment of the device, the transformation module is adapted to transform the entire first blockchain into the single blockchain data block.

Thereby, the data processing device is adapted to upgrade the security level of any data contained in the first blockchain in a single step. This enables a preferably quick and efficient security upgrade.

In another embodiment of the device, the second hash-function encryption mechanism comprises a higher complexity than the first hash-function encryption mechanism. For example, the complexity may correlate with the required processing power; a higher complexity can require more processing power or computational resources to perform the respective has-function encryption mechanism. For example, complexity may correlate with the number of required processing operations. In another embodiment of the device, the first hash-function encryption mechanism is adapted to generate a first set of hash values and the second hash-function encryption mechanism is adapted to generate a second set of hash values, wherein the string length of each of the second set of hash values exceeds the string length of each of the first set of hash values.

Thereby, such an improved security level may be implemented in an unambiguous manner, namely by the string length of a hash-function encryption mechanism. Such an approach enables to switch from a first hash-function encryption mechanism to a second-hash function encryption, wherein both of these approaches may be based on the same underlying computation principle, but are merely different in the extent of complexity, which is applied the underlying principle. Therefore, it is possible to improve the security level of the data included in the first blockchain using a preferably low extent of modifications. Thereby, an efficient adaption to a higher security level may be provided.

In another embodiment, the device further comprising a user interface, which is adapted to control the transformation module to activate said transforming selectively based on a user command.

Thereby, a user may be enabled to control the adaption of the security level of data contained in the first blockchain based on a plurality of circumstances monitored by the user.

In another embodiment, the device further comprises a generation module, which is adapted to generate the second blockchain.

Thereby, the device itself is enabled to adjust the specifications of the second blockchain and the specifications of the single blockchain data block requested for chaining with the second blockchain to each other. Consequently, an improved chaining efficiency of the single blockchain data block with the second blockchain may be realized.

In another embodiment of the device, the generation module is further adapted to start the generation of the second blockchain upon providing of the second hash-function encryption mechanism to the device.

Thereby, the device is adapted to improve the security level of the data contained within the first blockchain, as soon as an appropriate encryption mechanism has been established. Therefore, an improved protection against manipulation may be achieved by improving the security level of data contained in the first blockchain at a preferably early point in time.

In another embodiment of the device, the transformation module is adapted to selectively activate said transforming based on a timer expiry.

Thereby, automated means may be provided, which regularly improve the security level of data contained in the first blockchain.

In another embodiment of the device, the transformation module is adapted to selectively activate said transforming based on a count of the plurality of first data blocks.

Thereby, automated means may be provided, which regularly may establish single blockchain data blocks to be chained to the second blockchain, wherein the data volume of each single blockchain data block comprises a preferably constant size. Such an approach enables a processing efficient resettlement of data from the first blockchain towards the second blockchain.

In an embodiment of the device, the transformation module is adapted to selectively activate said transforming based on an amount of computational resources available at the device. In another embodiment of the device, the transformation module is adapted to selectively activate said transforming based on an amount of computational resources available at the blockchain network.

Thereby, the extent of a selected security level and the computational capability of the respective blockchain environment may be adjusted to each other. This enables the device to set the security level at a certain security level, based on which chaining of the single blockchain data block with the second blockchain may still be performed in an efficient manner.

In another embodiment of the device, the transformation module is adapted to selectively activate said transforming in response to detecting a security break at the first blockchain.

Thereby, the security level may be improved in direct response to the identification of deficiencies existing the blockchain environment. Thus, potentially hazardous situations, in which data manipulation could occur, can be quickly eliminated.

In another embodiment, the method is executed by a device according to any the embodiments described in the present disclosure.

Thereby, since the device may be adapted to the respective present needs, the method may be performed in a preferable manner.

A hash value within the meaning of the present disclosure may refer to any second data of the hash-function encryption mechanism. Hereby, each hash value may be unique. Further, the hash value may be a checksum comprising a plurality of digits and/or strings. Hereby, complexity of the hash value may correlate with the number of digits and/or stings of such a checksum.

The above summary is merely intended to give a short overview over some features of some embodiments and implementations and is not to be construed as limiting. Other embodiments may comprise other features than the ones explained above.

BRIEF DESCRIPTION OF THE DRAWINGS

The above and other elements, features, steps and characteristics of the present disclosure will be more apparent from the following detailed description of embodiments with reference to the following figures:

Figure 1 schematically illustrates a blockchain network comprising a device, which is adapted to transform data of a first blockchain 4, according to various examples.

Figure 2 schematically illustrates a first blockchain according to various examples.

Figure 3 schematically illustrates a second blockchain according to various examples.

Figure 4 schematically illustrates a layered concept based on a recursive encapsulation of a data block using multiple blockchains.

Figure 5 schematically illustrates a flowchart of a method of transforming data of a first blockchain according to various examples.

DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

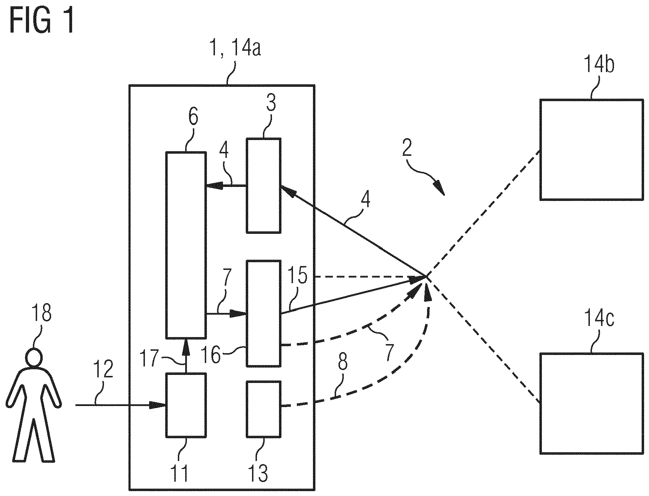

Figure 1 schematically illustrates a blockchain network 2 comprising a device 1, which is adapted to transform data of a first blockchain 4, according to various examples. According to this, the blockchain network 2 may comprise a plurality of blockchain network nodes 14a-14c, wherein one of these blockchain network nodes 14a may be implemented by the device 1. The device 1 may be connected with the blockchain network 2 and/or may be a part of the blockchain network 2.

The device 1 may comprise a receiving module 3, which is adapted to receive, from the blockchain network 2, a first blockchain 4 comprising a plurality of first data blocks 5a-5d, wherein chaining of the first blockchain 4 is based on a first hash-function encryption mechanism.

The device 1 may further comprise a transformation module 6, which is adapted to transform at least two first data blocks 5a-5d of the first blockchain 4 into a single blockchain data block 7. The transformation module 6 may be adapted to transform the entire first blockchain 4 into the single blockchain data block 7. Hereby, the transformation module 6 may be adapted to selectively activate said transforming based on a timer expiry. The transformation module 6 may also be adapted to selectively activate said transforming based on a count of the plurality of first data blocks 5a-5d. The transformation module 6 may also be adapted to selectively activate said transforming based on an amount of computational resources available at the device 1. The transformation module 6 may further be adapted to selectively activate said transforming based on an amount of computational resources available at the blockchain network 2. The transformation module 6 may further be adapted to selectively activate said transforming in response to detecting a security break at the first blockchain 4.

The device 1 may further comprise a request module 16, which may be adapted to request, at the blockchain network 2, chaining of the single blockchain data block 7 with a second blockchain 8. For doing so, the request module 16 may send a chaining request 15 to the blockchain network 2. Hereby, chaining of the second blockchain 8 may be based on a second hash-function encryption mechanism different from the first hash-function encryption mechanism. In this context, the second hash-function encryption mechanism may comprise a higher complexity than the first hash-function encryption mechanism. Further, the first hash-function encryption mechanism may be adapted to generate a first set of hash values 9a-9c and the second hash-function encryption mechanism may be adapted to generate a second set of hash values 10a-10c, wherein the string length of each of the second set of hash values 10a-10c may exceed the string length of each of the first set of hash values 9a-9c.

The device 1 may further comprise a user interface 11, which is adapted to control the transformation module 6 to selectively activate said transforming based on a user command 12 received from a user 18. Such a control of the transformation module 6 may be established by sending a control signal 17 to the transformation module 6.

The device 1 may further comprise a generation module 13, which is adapted to generate the second blockchain 8. Hereby, the generation module 13 may be adapted to start the generation of the second blockchain 8 upon providing of the second hash-function encryption mechanism to the device 1.

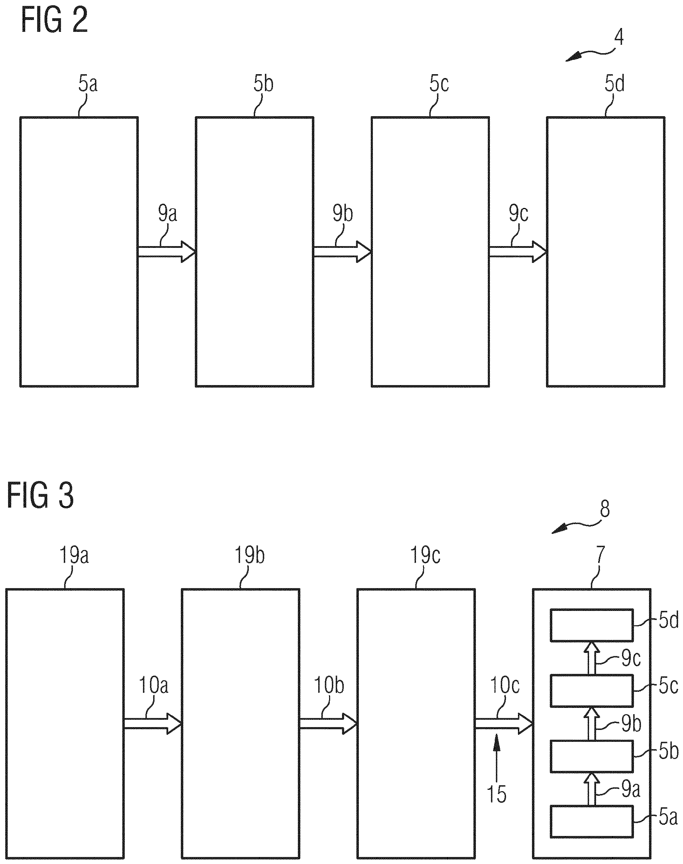

Figure 2 schematically illustrates a first blockchain 4 according to various examples. The first blockchain 4 may comprise a plurality of first data blocks 5a-5d, which may be different from each other. The first data blocks 5a-5d of the first blockchain 4 may be chained by first hash values 9a-9c, which are based on a first hash-function encryption mechanism. Such a first blockchain 4 may be received by the receiving module 3 of the device 1 according to Figure 1.

Figure 3 schematically illustrates a second blockchain 8 according to various examples. The second blockchain may comprise a plurality of different second data blocks 19a-19c, which may be chained by second has values 10-10b based on a second hash-function encryption mechanism. Hereby, the chaining request 15 may be sent by the request module 16 of the device 1, and may be received by the Blockchain network nodes 14b-14c of the blockchain network 2. In this context, the chaining request 15 may be adapted for chaining the single blockchain data block 7 with the second blockchain 8. Hereby, the single blockchain data block 7 may comprise at least two first data blocks 5a-5d of the first blockchain 4, wherein these at least two first data blocks 5a-5c may be chained by the first hash values 9a-9c based on the first hash-function encryption mechanism.

In case that the single blockchain data block 7 is chained with the second blockchain 8, it may be designated that further network node 14b, 14 have to perform a mining procedure, in order to verify the requested chaining of the single blockchain data block 7.

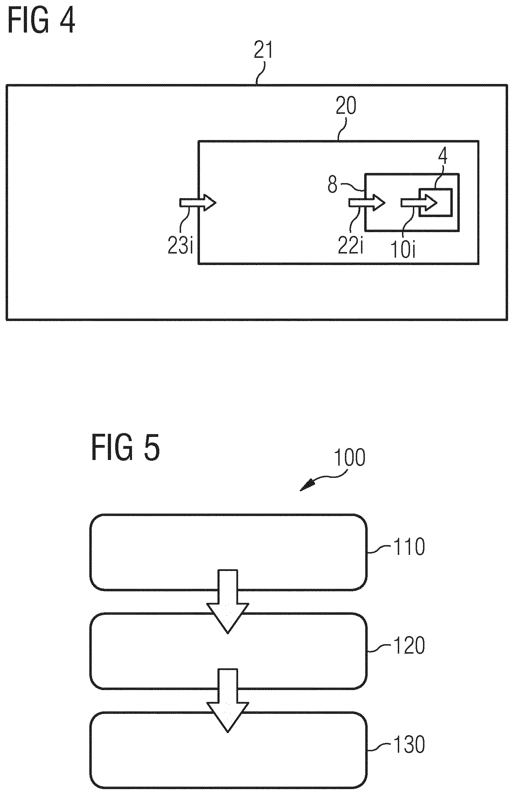

Figure 4 schematically illustrates a layered concept based on a recursive encapsulation of a data block using multiple blockchains. Such a recursive concept may be based on an iterative application of the encapsulation technique, which is depicted in Figure 3.

According to this, the first blockchain 4 may be transformed and a corresponding single blockchain data block 7 comprising data of the first blockchain 4 may chained with the second blockchain 8 using a second hash value 10i. In the same way, the second blockchain 8 may be transformed and a further blockchain data block comprising data of the second blockchain 8 may be chained with the third blockchain 20 using a third hash value 22i. Again, the third blockchain 20 may be transformed and a further blockchain data block comprising data of the third blockchain 20 may be chained with the nth blockchain 21 using an nth hash value 23i. Such a layered concept may be followed-up for an arbitrary number of times.

Based on such an approach and in order to ensure the integrity of all blocks, it is not necessarily required to check all blocks, since the blocks chained with a previous hash-function encryption mechanism are protected by the uppermost layer. In a practical application of such an approach, the peers can easily check that all have stored the same blockchain and in this case, the integrity may be protected. Only if the blockchain is to be checked from a new client from a not so trustworthy source, it may be required to recheck all blocks.

Based on a mathematical method of approach, a previous blockchain $B_{old}$ may be defined as

$$B_{old} = (b_1, ..., b_n), \quad b_i = (\pi(b_{i-1}), \text{ data}), \quad (1)$$

wherein bi refers to different data blocks of a blockchchain, $\pi$ refers to a hash function and "data" refers to the data included in the respective data block of the blockchain. Such a blockchain may be protected from manipulations by an algorithm $\pi$ using a cryptographic hash function $\pi$. Hereby, $B_{old}$ may be valid, if

$$\Pi(B_{old}) = \text{true}. \quad (2)$$

Since for each block $b_i = (\pi(b_{i-1}), \text{data})$ in such a chain, results of the cryptographic hash function $\pi$ may be part of the chain data, harden the chain using an improved cryptographic hash function $\Xi$ would require to re-calculate all existing blocks to $b_i = (\xi(b_{i-1}), \text{data})$.

If instead the previous chain Bold is put as a block in a new blockchain $B_{new}$ that is protected by hash function $\Xi$ using the harder cryptographic hash function $\xi$, the blockchain cannot be manipulated, since it is protected by $\xi$:

$$B_{new} = (b_1, ..., b_n), \quad (3)$$

$$b_1 = (\theta, \text{ Bold}), \quad (4)$$

$$b_2 = (\xi(b_1), \text{ data}). \quad (5)$$

In this case, $\Pi$ may still validate a manipulated chain, but since $B_{old}$ may be stored in a block $b_1$ of $B_{new}$, it is protected by $\xi(b_1)$ and changes in the data of Bold may be uncovered by $\Xi$.

Figure 5 schematically illustrates a flowchart of a method 100 of transforming data of a first 4 blockchain according to various examples. Hereby, the method 100 may be executed in a blockchain network 2.

At 110, a first blockchain 4 may be received from the blockchain network 2. The first blockchain 4 may comprise a plurality of first data blocks 5a-5d, wherein chaining of the first blockchain 4 may be based on a first hash-function encryption mechanism.

At 120, at least two first data blocks 5a-5d of the first blockchain 4 may be transformed into a single blockchain data block 7.

At 130, chaining of the single blockchain data block 7 with a second blockchain 8 may be requested at the blockchain network 2.

According to various examples, the above-outlined method 100 may be executed by any of the above outlined configurations of the device 1.

Summarizing, above techniques have been described which facilitate hardening of the protection of blockchain-protected data. This may be achieved by aggregating two or more data blocks of a first blockchain in a data block of a second blockchain, the second blockchain providing an improved encryption mechanism. This aggregation can be repeatedly applied, e.g., to continue hardening the blockchain protection over time. Thereby, a recursive encapsulation of a data block using multiple blockchains in a layered concept can be achieved.

**Claims**

1. A device (1), which is adapted to be connected with a blockchain network (2), comprising:

   a receiving module (3), adapted to receive, from the blockchain network (2), a first blockchain (4) comprising a plurality of first data blocks (5a-5d), wherein chaining of the first blockchain (4) is based on a first hash-function encryption mechanism,
   a transformation module (6), adapted to transform at least two first data blocks (5a-5d) of the first blockchain (4) into a single blockchain data block (7), wherein the block chain data block (7) includes the at least two first data blocks (5a-5d) from the first block chain (4) which are chained based on the first hash-function encryption mechanism, and
   a request module (16), adapted to request, at the blockchain network (2), chaining of the single blockchain data block (7) with a second blockchain (8),
   wherein chaining of the second blockchain (8) is based on a second hash-function encryption mechanism different from the first hash-function encryption mechanism.

2. The device (1) according to claim 1, wherein the transformation module (6) is adapted to transform the entire first blockchain (4) into the single blockchain data block (7).

3. The device (1) according to claim 1 or 2, wherein the second hash-function encryption mechanism comprises a higher complexity than the first hash-function encryption mechanism.

4. The device (1) according to claim 3, wherein the first hash-function encryption mechanism is adapted to generate a first set of hash values (9a-9c) and the second hash-function encryption mechanism is adapted to generate a second set of hash values (10a-10c), wherein the string length of each of the second set of hash values (10a-10c) exceeds the string length of each of the first set of hash values (9a-9c).

5. The device (1) according to any of the preceding claims, further comprising a user interface (11), adapted to control the transformation module (6) to selectively activate said transforming based on a user command (12).

6. The device (1) according to any of the preceding claims, further comprising a generation module (13), which is adapted to generate the second blockchain (8).

7. The device (1) according to claim 6, wherein the generation module (13) is adapted to start the generation of the second blockchain (8) upon providing of the second hash-function encryption mechanism to the device (1).

8. The device (1) according to any of the preceding claims, wherein the transformation module (6) is adapted to selectively activate said transforming based on a timer expiry.

9. The device (1) according to any of the preceding claims, wherein the transformation module (6) is adapted to selectively activate said transforming based on a count of the plurality of first data blocks (5a-5d).

10. The device (1) according to any of the preceding claims, wherein the transformation module (6) is adapted to selectively activate said transforming based on an amount of computational resources available at the device (1).

**EP 3 570 489 B1**

11. The device (1) according to any of the preceding claims, wherein the transformation module (6) is adapted to selectively activate said transforming based on an amount of computational resources available at the blockchain network (2).

12. The device (1) according to any of the preceding claims, wherein the transformation module (6) is adapted to selectively activate said transforming in response to detecting a security break at the first blockchain (4).

13. Method (100), executed in a blockchain network (2), comprising:

    receiving (110), from the blockchain network (2), a first blockchain (4) comprising a plurality of first data blocks (5a-5d), wherein chaining of the first blockchain (4) is based on a first hash-function encryption mechanism, transforming (120) at least two first data blocks (5a-5d) of the first blockchain (4) into a single blockchain data block (7), wherein the block chain data block (7) includes the at least two first data blocks (5a-5d) from the first block chain (4) which are chained based on the first hash-function encryption mechanism, and
    requesting (130), at the blockchain network (2), chaining of the single blockchain data block (7) with a second blockchain (8),
    wherein chaining of the second blockchain (8) is based on a second hash-function encryption mechanism different from the first hash-function encryption mechanism.

14. Method (100) according to claim 13, which is executed by a device (1) according to any of claims 1 to 12.

**Patentansprüche**

1. Vorrichtung (1), die dafür ausgelegt ist, mit einem Blockchain-Netzwerk (2) verbunden zu werden, und Folgendes umfasst:

    ein Empfangsmodul (3), das dafür ausgelegt ist, von dem Blockchain-Netzwerk (2) eine erste Blockchain (4) zu empfangen, die eine Mehrzahl von ersten Datenblöcken (5a-5d) umfasst, wobei das Verketten der ersten Blockchain (4) auf einem ersten Hashfunktions-Verschlüsselungsmechanismus basiert,
    ein Transformationsmodul (6), das dafür ausgelegt ist, wenigstens zwei erste Datenblöcke (5a-5d) der ersten Blockhain (4) in einen einzelnen Blockchain-Datenblock (7) zu transformieren, wobei der Blockchain-Datenblock (7) die wenigstens zwei ersten Datenblöcke (5a-5d) von der ersten Blockchain (4) enthält, die basierend auf dem ersten Hashfunktions-Verschlüsselungsmechanismus verkettet sind, und
    ein Anforderungsmodul (16), das dafür ausgelegt ist, an dem Blockchain-Netzwerk (2) das Verketten des einzelnen Blockchain-Datenblocks (7) mit einer zweiten Blockchain (8) anzufordern,
    wobei das Verketten der zweiten Blockhain (8) auf einem zweiten Hashfunktions-Verschlüsselungsmechanismus basiert, der anders ist als der erste Hashfunktions-Verschlüsselungsmechanismus.

2. Vorrichtung (1) nach Anspruch 1, wobei das Transformationsmodul (6) dafür ausgelegt ist, die gesamte erste Blockchain (4) in den einzelnen Blockchain-Datenblock (7) zu transformieren.

3. Vorrichtung (1) nach Anspruch 1 oder 2, wobei der zweite Hashfunktions-Verschlüsselungsmechanismus eine höhere Komplexität aufweist als der erste Hashfunktions-Verschlüsselungsmechanismus.

4. Vorrichtung (1) nach Anspruch 3, wobei der erste Hashfunktions-Verschlüsselungsmechanismus dafür ausgelegt ist, einen ersten Satz von Hashwerten (9a-9c) zu erzeugen, und der zweite Hashfunktions-Verschlüsselungsmechanismus dafür ausgelegt ist, einen zweiten Satz von Hashwerten (10a-10c) zu erzeugen, wobei die Zeichenfolgenlänge von jedem des zweiten Satzes von Hashwerten (10a-10c) die Zeichenfolgenlänge von jedem des ersten Satzes von Hashwerten (9a-9c) überschreitet.

5. Vorrichtung (1) nach einem der vorhergehenden Ansprüche, ferner umfassend eine Benutzerschnittstelle (11), die dafür ausgelegt ist, das Transformationsmodul (6) zu steuern, um das Transformieren basierend auf einem Benutzerbefehl (12) selektiv zu aktivieren.

6. Vorrichtung (1) nach einem der vorhergehenden Ansprüche, ferner umfassend ein Erzeugungsmodul (13), das dafür ausgelegt ist, die zweite Blockchain (8) zu erzeugen.

7. Vorrichtung (1) nach Anspruch 6, wobei das Erzeugungsmodul (13) dafür ausgelegt ist, die Erzeugung der zweiten Blockchain (8) bei Bereitstellung des zweiten Hashfunktions-Verschlüsselungsmechanismus an die Vorrichtung (1) zu starten.

8. Vorrichtung (1) nach einem der vorhergehenden Ansprüche, wobei das Transformationsmodul (6) dafür ausgelegt ist, das Transformieren basierend auf dem Ablauf eines Zeitgebers selektiv zu aktivieren.

9. Vorrichtung (1) nach einem der vorhergehenden Ansprüche, wobei das Transformationsmodul (6) dafür ausgelegt ist, das Transformieren basierend auf einem Zählwert der Mehrzahl von ersten Datenblöcken (5a-5d) selektiv zu aktivieren.

10. Vorrichtung (1) nach einem der vorhergehenden Ansprüche, wobei das Transformationsmodul (6) dafür ausgelegt ist, das Transformieren basierend auf einer Menge von an der Vorrichtung (1) verfügbaren Rechenressourcen selektiv zu aktivieren.

11. Vorrichtung (1) nach einem der vorhergehenden Ansprüche, wobei das Transformationsmodul (6) dafür ausgelegt ist, das Transformieren basierend auf einer Menge von an dem Blockchain-Netzwerk (2) verfügbaren Rechenressourcen selektiv zu aktivieren.

12. Vorrichtung (1) nach einem der vorhergehenden Ansprüche, wobei das Transformationsmodul (6) dafür ausgelegt ist, das Transformieren als Reaktion auf das Erkennen eines Sicherheitsverstoßes an der ersten Blockchain (4) selektiv zu aktivieren.

13. In einer Blockchain (2) ausgeführtes Verfahren (100), das Folgendes umfasst:

Empfangen (110), von dem Blockchain-Netzwerk (2), einer ersten Blockchain (4), die eine Mehrzahl von ersten Datenblöcken (5a-5d) umfasst, wobei das Verketten der ersten Blockchain (4) auf einem ersten Hashfunktions-Verschlüsselungsmechanismus basiert,
Transformieren (120) von wenigstens den zwei ersten Datenblöcken (5a-5d) der ersten Blockchain (4) in einen einzelnen Blockchain-Datenblock (7), wobei der Blockchain-Datenblock (7) die wenigstens zwei ersten Datenblöcke (5a-5d) von der ersten Blockchain (4) enthält, die basierend auf dem ersten Hashfunktions-Verschlüsselungsmechanismus verkettet sind,
Anfordern (130) an dem Blockchain-Netzwerk (2) des Verkettens des einzelnen Blockchain-Datenblocks (7) mit einer zweiten Blockchain (8)
wobei das Verketten der zweiten Blockchain (8) auf einem zweiten Hashfunktions-Verschlüsselungsmechanismus basiert, der anders ist als der erste Hashfunktions-Verschlüsselungsmechanismus.

14. Verfahren (100) nach Anspruch 13, das von einer Vorrichtung nach einem der Ansprüche 1 bis 12 ausgeführt wird.

**Revendications**

1. Un dispositif (1) qui est adapté de façon à être raccordé à un réseau de chaîne de blocs (2), comprenant :

un module de réception (3) adapté de façon à recevoir, à partir du réseau de chaîne de blocs (2), une première chaîne de blocs (4) comprenant une pluralité de premiers blocs de données (5a-5d), la mise en chaîne de la première chaîne de blocs (4) étant basée sur un premier mécanisme de chiffrement de fonction de hachage, un module de transformation (6) adapté de façon à transformer au moins deux premiers blocs de données (5a-5d) de la première chaîne de blocs (4) en un bloc de données de chaîne de blocs unique (7), le bloc de données de chaîne de blocs (7) comprenant les au moins deux premiers blocs de données (5a-5d) provenant de la première chaîne de blocs (4) qui sont mis en chaîne en fonction du premier mécanisme de chiffrement de fonction de hachage, et un module de demande (16) adapté de façon à demander, au niveau du réseau de chaîne de blocs (2), la mise en chaîne du bloc de données de chaîne de blocs unique (7) avec une deuxième chaîne de blocs (8), la mise en chaîne de la deuxième chaîne de blocs (8) étant fondée sur un deuxième mécanisme de chiffrement de fonction de hachage différent du premier mécanisme de chiffrement de fonction de hachage.

2. Le dispositif (1) selon la revendication 1, dans lequel le module de transformation (6) est adapté de façon à transformer la totalité de la première chaîne de blocs (4) en le bloc de données de chaîne de blocs unique (7).

3. Le dispositif (1) selon la revendication 1 ou 2, dans lequel le deuxième mécanisme de chiffrement de fonction de hachage présente une complexité plus élevée que le premier mécanisme de chiffrement de fonction de hachage.

4. Le dispositif (1) selon la revendication 3, dans lequel le premier mécanisme de chiffrement de fonction de hachage est adapté de façon à générer un premier ensemble de valeurs de hachage (9a-9c) et le deuxième mécanisme de chiffrement de fonction de hachage est adapté de façon à générer un deuxième ensemble de valeurs de hachage (10a-10c), la longueur de chaîne de chaque valeur de hachage du deuxième ensemble de valeurs de hachage (10a-10c) dépassant la longueur de chaîne de chaque valeur de hachage du premier ensemble de valeurs de hachage (9a-9c).

5. Le dispositif (1) selon l'une quelconque des revendications précédentes, comprenant en outre une interface utilisateur (11) adaptée de façon à commander le module de transformation (6) de façon à activer de manière sélective ladite transformation en fonction d'une commande d'utilisateur (12) .

6. Le dispositif (1) selon l'une quelconque des revendications précédentes, comprenant en outre un module de génération (13) qui est adapté de façon à générer la deuxième chaîne de blocs (8).

7. Le dispositif (1) selon la revendication 6, dans lequel le module de génération (13) est adapté de façon à démarrer la génération de la deuxième chaîne de blocs (8) après la fourniture du deuxième mécanisme de chiffrement de fonction de hachage au dispositif (1).

8. Le dispositif (1) selon l'une quelconque des revendications précédentes, dans lequel le module de transformation (6) est adapté de façon à activer de manière sélective ladite transformation en fonction d'une expiration d'horloge.

9. Le dispositif (1) selon l'une quelconque des revendications précédentes, dans lequel le module de transformation (6) est adapté de façon à activer de manière sélective ladite transformation en fonction d'un décompte de la pluralité de premiers blocs de données (5a-5d).

10. Le dispositif (1) selon l'une quelconque des revendications précédentes, dans lequel le module de transformation (6) est adapté de façon à activer de manière sélective ladite transformation en fonction d'une quantité de ressources de calcul disponibles au niveau du dispositif (1).

11. Le dispositif (1) selon l'une quelconque des revendications précédentes, dans lequel le module de transformation (6) est adapté de façon à activer de manière sélective ladite transformation en fonction d'une quantité de ressources de calcul disponibles au niveau du réseau de chaîne de blocs (2).

12. Le dispositif (1) selon l'une quelconque des revendications précédentes, dans lequel le module de transformation (6) est adapté de façon à activer de manière sélective ladite transformation en réponse à la détection d'une rupture de sécurité au niveau de la première chaîne de blocs (4).

13. Un procédé (100), exécuté dans un réseau de chaîne de blocs (2), comprenant :

la réception (110), à partir du réseau de chaîne de blocs (2), d'une première chaîne de blocs (4) comprenant une pluralité de premiers blocs de données (5a-5d), la mise en chaîne de la première chaîne de blocs (4) étant fondée sur un premier mécanisme de chiffrement de fonction de hachage,
la transformation (120) d'au moins deux premiers blocs de données (5a-5d) de la première chaîne de blocs (4) en un bloc de données de chaîne de blocs unique (7), le bloc de données de chaîne de blocs (7) comprenant les au moins deux premiers blocs de données (5a-5d) provenant de la première chaîne de blocs (4) qui sont mis en chaîne en fonction du premier mécanisme de chiffrement de fonction de hachage, et
la demande (130), au niveau du réseau de chaîne de blocs (2), de mise en chaîne du bloc de données de chaîne de blocs unique (7) avec une deuxième chaîne de blocs (8),
la mise en chaîne de la deuxième chaîne de blocs (8) étant basée sur un deuxième mécanisme de chiffrement de fonction de hachage différent du premier mécanisme de chiffrement de fonction de hachage.

14. Le procédé (100) selon la revendication 13, qui est exécuté par un dispositif (1) selon l'une quelconque des revendications 1 à 12.

FIG 1

FIG 2

FIG 3

FIG 4

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8531247 B2
- US 8892616 B2
- US 8300811 B2
- US 9147088 B2
- US 9584311 B2
- EP 2976707 B1
- EP 2605445 B1
- EP 2870565 A1
- EP 2891102 A1
- WO 2017137256 A1
- EP 2870565 B1
- EP 3028140 B1
- EP 17175275 A
- US 8843761 B2
- CN 107577427 A

**Non-patent literature cited in the description**

- **MITAR MILUTINOVIC et al.** Proof of Luck: an Efficient Blockchain Consensus Protocol. Olin Library Cornell University Ithaca, 16 March 2017